# EUROPEAN PATENT APPLICATION

(11) **EP 2 348 371 A1**
(43) Date of publication of application: **27.07.2011**
(21) Application number: 10165783.1
(22) Date of filing: 14.06.2010
(51) Int. Cl.: G05B 19/042

(54) **Energy management and security in multi-unit facilities**

(30) Priority: 22.01.2010 US 691862
(71) Applicant: Assa Abloy Hospitality, Inc., Richardson, TX 75081 (US)
(72) Inventor: Alexander, Arnon, Marietta, GA 30068 (US); Elfström, Jan, 261 44, Landskrona (SE); Aase, Halvor, 1536, Moss (NO); Lyons, Steve, Sugar Hill, GA 30518 (US); Kjallman, Martin, 252 85, Helsingborg (SE); Persson, Magnus, 26172, Häljarp (SE); Hagan, Ketil, 1592, Vaaler (NO)
(74) Representative: Grosfillier, Philippe

(57) **Abstract**

Methods, systems, and devices for managing energy consumption in multi-room facilities are provided. In particular, intelligent mechanisms for determining a room occupancy state and then for managing energy settings of that room are provided. Some logic for implementing these mechanisms may be provided in an in-room device, such as a motion detector, thermostat, door, lock, television, set top box, *etc.*

## Description

### FIELD OF THE INVENTION

The present invention relates generally to energy management and security systems, devices, and methods particularly well suited for use in multi-room facilities.

### BACKGROUND

Multi-room or multi-suite facilities such as hotels, apartment buildings, office complexes, dormitories, office buildings, classrooms, cruise ships and laboratory facilities, and similar structures have many devices that, if monitored and/or controlled in a manner not currently done, will generate new functionalities in the areas of facility security, facility operational efficiency, and facility maintenance for the facility operator and will generate an overall cost reduction in facility management and maintenance.

In a hotel, for example, individual rooms utilize devices/elements such as doors, electronic locks, Do Not Disturb (DND) devices, lights, heating, ventilation, and air conditioning (HVAC), safe, minibar, draperies, maid communication devices, room occupancy detection and communication, and more and all have a potentially high impact on the hotel operation (particularly operating costs) and guest comfort.

Many building owners, including the owners of apartments, offices and hotels, continue to seek methods to decrease their HVAC expenses. One method to do so is to select minimum and maximum setback temperatures for a room, which require less operation of the room's HVAC equipment, when the room is not occupied. This method requires an accurate occupancy sensor for the room.

In the past, motion detectors have been used as occupancy sensors. In particular, infrared motion detectors have been used. An infrared motion detector typically measures persons or objects that are both 1) showing a selected surface temperature difference from that of the room and 2) moving at a selected speed.

However, the use of a motion detector as an occupancy sensor does not produce an accurate indication of a room being occupied in situations in which an occupant remains motionless for an extended period of time, such as in sleeping, reading or watching television. The motion detector is also not accurate in rooms in which the geometry of the room includes blind spots to the motion detector such as alcoves or bathrooms.

### SUMMARY

It is, therefore, one aspect of the present invention to provide a more intelligent mechanism for managing the operations of a multi-room facility. More specifically, embodiments of the present invention provide methods, systems, and devices for determining occupancy states of a room or collection of rooms. In accordance with at least some embodiments of the present invention, the occupancy state of a room or collection of rooms may be determined by analyzing a combination of a door state and motion activity within the room or rooms.

Embodiments of the present invention provide an energy management system to control the in-room energy consumption based on detecting physical occupancy of the room. It can be offline (in-room only) or as a part of an online system using online device networks such as those described in U.S. Patent Application No. 11/872,549 to Alexander et al., the entire contents of which are incorporated herein by reference. In some embodiments of the present invention, components of the energy management system comprise one or more of an intelligent thermostat module, a motion sensor which may also have some built in intelligence, a software system for controlling the transmission of message throughout the multi-room facility, and service terminal software for a handheld programmer unit, which may also be referred to as a service terminal. The online system may utilize existing gateways and, if needed, existing routers of a lock network. In some embodiments, these gateways are outside of the room and receive data wirelessly from several rooms and convert it to network data, usually in the form of a TCP/IP packet.

In accordance with at least one embodiment of the present invention, the door lock is adapted to send a wireless message to the thermostat controller each time the door is opened, detailing that it is a door open command, opened by key or from the inside, and if by key sends the user type (guest or staff) and expiration date if it is a guest key. The door lock may also send a message when the door is closed.

In some embodiments, the motion sensor is configured to send a wireless message to the thermostat controller, or some other in-room device or near-room device, when motion is detected in the room. It may be possible to configure the motion detector to refrain from sending this information more than once in a predetermined time period (e.g., 30 second time period).

In some embodiments, the thermostat controller receives this information and makes determinations of the occupancy of the room. When the door is closed and motion has been sensed, the room enters the Occupied State. In this state, control of the HVAC system, and in the future other energy consuming devices such as the lighting and TV, will be given to the occupant based on the settings of the thermostat. When the door opens, the thermostat controller will operate based on the set temperature of the unit for a configurable period of time (typically 8 minutes), and will enter or remain in the Unoccupied or Unsold state until a door closed and motion detected message is received. If no motion is detected for a configurable amount of time (e.g., 8 minutes), the thermostat controller will control the room based on the energy management settings, not the local settings of the thermostat. Additional features are included to determine exactly what to do when the door is left open, based on if it is an interior corridor door or an exterior door.

In addition to the operational messages, the battery operated devices may also send their battery status information to the thermostat controller.

If no RF door lock is used, the system will monitor the door position using a standard door switch, either wired or wireless. In this scenario, the only information the thermostat controller receives is the door open and door closed status. If wired, such information may be received through a closed loop input.

Embodiments of the present invention add the detection of occupants when they use any online devices of the room, such as pressing the buttons of the thermostat, opening or closing the in-room safe or minibar, turning on or off the lights, setting the Do Not Disturb on a separate device or on the door lock. If any of these (or other) devices are used, the system can determine that a person is inside the controlled space.

In accordance with at least some embodiments of the present invention, the state of "door closed", plus any other device being used, means the room is occupied.

It is another aspect of the present invention to provide an intruder detection and alert feature. This particular feature is a security alert that can be used in rooms where occupancy determination is present. To use this feature, a motion sensor and online door lock may be employed. As one example, if the inside handle of the door lock is turned, but the room is in the unoccupied state, an alarm is issued to alert security that an under the door tool may have been used to gain access surreptitiously. This alarm can be sounded in a number of methods, including computer screen, email, SMS, buzzer, *etc.*

It is another aspect of the present invention to provide an automated Do Not Disturb (DND) feature. This feature may also be used in a room where occupancy determination is present. In accordance with at least some embodiments of the present invention, when the room enters the occupied state, a signal is sent to the door lock to enable the DND feature of the lock without the guest having to do anything.

In another aspect of the present invention, a motion only functionality may be utilized whereby occupancy state can be determined without door monitoring. This feature may employ one or more motion sensors and a controller, which may be provided in a thermostat or other central management device. In some embodiments, two time intervals may be defined, a daytime interval and a typically shorter nighttime interval, although the daytime interval may be equal to or shorter than the nighttime interval. In the daytime interval, whenever motion is detected, an energy management system may enter an occupied state for a configurable (customer configuration or administrator configuration) number of minutes, e.g. 15 - 30. Each time motion is detected, the timer is restarted. When in the nighttime interval, if motion is detected, the energy management system may lock into an occupied state until the daytime interval is reached.

In another aspect of the present invention, a mechanism is provided for turning off a motion sensor (e.g., to save batteries) when occupancy of a room is confirmed. When using door monitoring and motion detection for occupancy determination, or in nighttime interval of utilizing motion-only occupancy detection, once occupancy is confirmed by the door being closed and motion sensed, the motion sensor may be turned off until the door has been opened again. By entering this sleep mode, the battery life of the motion sensor will be extended.

More generally, the present invention concerns a multi-room facility and a method for managing a multi-room facility, comprising:
a plurality of rooms each containing at least one door and one or more in-room devices, at least one of the in-room devices comprising a controller adapted to manage selected aspects of the room, wherein the controller is further adapted to execute at least one of the following sub-operations:
   (a) determine that activity has occurred at a first in-room device and based on making such a determination set an occupancy state of the room to occupied;
   (b) detect that activity has occurred at a second in-room device while the occupancy state of the room is unoccupied and activate an intruder alert;
   (c) determine that the occupancy state of the room is occupied and automatically enable a Do Not Disturb function at the at least one door;
   (d) determine the occupancy state of the room in the absence of analyzing a state of the at least one door; and
   (e) determine that the occupancy state of the room is occupied and automatically disable an in-room motion sensor.

The controller may perform sub-operation (a), and the activity may comprise a human-initiated activity detected by the first in-room device and the first in-room device may be adapted to generate a message for reporting the detected activity and transmit the message to the controller.

The message may be transmitted to the controller in response to the in-room device receiving a request from the controller querying the in-room device for an activity update.

The message may be transmitted from the first in-room device to the controller in the absence of the controller requesting the message.

The controller may perform sub-operation (b), where the second in-room device comprises an internal lock and where the intruder alert comprises one or more of flashing a control panel screen, producing an image or set of images on a computer screen, sending an electronic message to security personnel, sounding a buzzer, and flashing a light.

The controller may perform sub-operation (c), where the controller is adapted to transmit at least one of a signal and message to the at least one door or a lock on the at least one door instructing the at least one door or the lock on the at least one door to enter the Do Not Disturb mode and where the at least one door or the lock on the at least one door remains in the Do Not Disturb mode until the at least one door is opened.

The controller may perform sub-operation (d), where the controller is adapted to operate in a daytime mode and a nighttime mode and where the controller is further adapted to lock the occupancy state of the room into an occupied state when motion is detected during the nighttime mode of operation or to set the occupancy state of the room into an occupied state for a configurable amount of time after in-room motion has been detected during the daytime mode of operation. During the daytime mode after in-room motion has been detected and after the configurable amount of time has passed the controller may be further operable to re-determine whether in-room motion has been detected since the configurable amount of time has passed.

After the controller transitions from the nighttime mode of operation to the daytime mode of operation the controller may be further configured to unlock the occupancy state of the room from an occupied state.

The controller may perform sub-operation (e), where the in-room motion detector comprises one or more of an antenna and motion sensor, where the controller is adapted to generate a message and transmit the message to the in-room motion detector, and where the in-room motion detector, upon receiving the message, is adapted to enter a sleep mode whereby the in-room motion detector temporarily disables one or more of its antenna and motion sensor.

The controller may be adapted to perform a plurality of sub-operations (a)-(e) at substantially the same time.

The controller may reside in one or more of (i) an in-room thermostat, (ii) a dedicated in-room controller, and (iii) an out-of-room router.

Functionality of the controller may be split between two or more devices.

The controller may communicate with a gateway device, where the gateway device facilitates communications between the controller and a control panel.

The gateway device may communicate with a plurality of controllers associated with a plurality of different rooms.

The Summary is neither intended nor should it be construed as being representative of the full extent and scope of the present invention. The present invention is set forth in various levels of detail and the Summary as well as in the attached drawings and in the detailed description of the invention and no limitation as to the scope of the present invention is intended by either the inclusion or non inclusion of elements, components, etc. in the Summary. Additional aspects of the present invention will become more readily apparent from the detailed description, particularly when taken together with the drawings.

### BRIEF DESCRIPTION OF THE DRAWINGS

Fig. 1 is a block diagram depicting a multi-room facility in accordance with embodiments of the present invention;
Fig. 2 is a block diagram depicting an energy management system in accordance with embodiments of the present invention;
Fig. 3 is a flow diagram depicting a general energy management method employed in accordance with embodiments of the present invention;
Fig. 4 is a flow diagram depicting a method of determining room occupancy state in accordance with embodiments of the present invention;
Fig. 5 is a flow diagram depicting an alternative occupancy determination method in accordance with embodiments of the present invention;
Fig. 6 is a flow diagram depicting an intruder detection and alerting method in accordance with embodiments of the present invention;
Fig. 7 is a flow diagram depicting an automated Do Not Disturb method employed in accordance with embodiments of the present invention;
Fig. 8 is a flow diagram depicting a motion only method of determining a room occupancy state in accordance with embodiments of the present invention; and
Fig. 9 is a flow diagram depicting a method of conserving battery life for in-room devices in accordance with embodiments of the present invention.

### DETAILED DESCRIPTION

Embodiments of the present invention are directed toward devices and methods of using such devices in a wireless network. Although well suited for use in systems and methods employing RF communication protocols, such as the ZigBee protocol, embodiments of the present invention may be suitable for use in systems employing other low power consumption communication protocols including, without limitation, wireless USB, Z-Wave, and variations of the ZigBee protocol known and not yet developed.

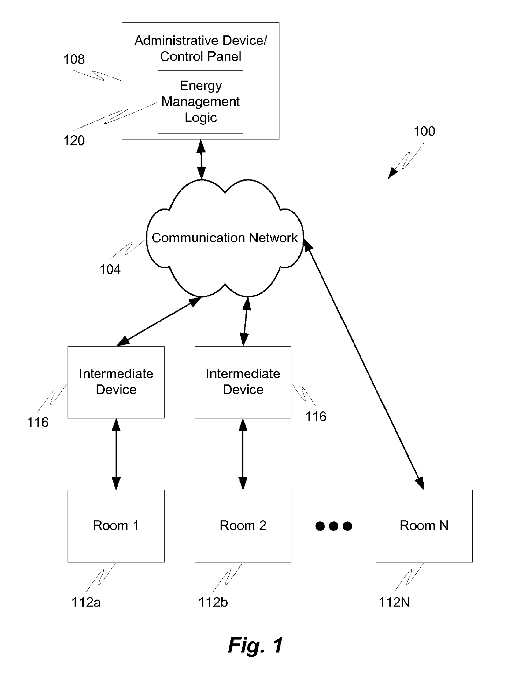

Referring initially to Fig. 1, an exemplary multi-room or multi-unit facility 100 will be described in accordance with at least some embodiments of the present invention. The multi-room facility 100 includes a plurality of rooms 112a-N. The energy consumption and security of such rooms 112a-N may be controlled at an administrative device/control panel 108. The control panel 108 may comprise energy management logic 120 for implementing the energy management and security features provided herein. The energy management logic 120 may be provided in the form of instructions stored in computer memory that, when executed by a processor, perform one or more methods described herein. In some embodiments the control panel 108 may be co-located in the same building or complex as the rooms 112. In other embodiments, the control panel 108 may be remote from the building or complex having the rooms 112.

In either instance, the rooms 112, or more specifically devices within or associated with the rooms 112, may be adapted to communicate with the control panel 108 via a communication network 104. In some embodiments, the rooms 112 may be connected directly to the communication network 104 while other rooms 112 may be connected to the communication network 104 via an intermediate device. Exemplary configurations of such a communication network are described in more detail in U.S. Patent Application No. 11/872,549, the entire contents of which are hereby incorporated herein by reference.

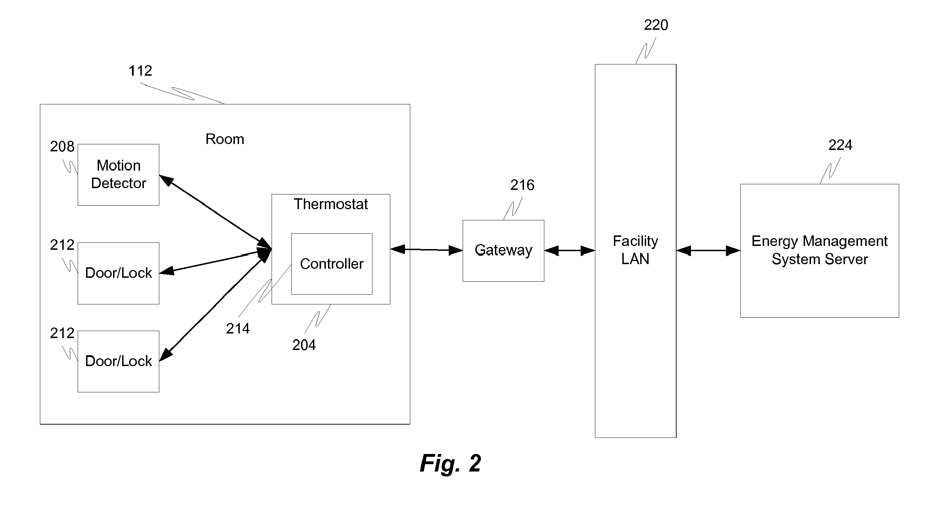

Fig. 2 depicts further details of the various devices within a room 112 that can be configured to communicate with a centralized management device, such as a centralized management server 224. More specifically, one or more rooms 112 within a multi-unit facility 100 may be provided with a plurality of devices, some of which communicate with each other and others of which communicate with the centralized management server 224. In accordance with at least some embodiments of the present invention, a room 112 may comprise a thermostat 204, a motion detector 208 (*e.g.,* an infrared motion detector, an RF device for detecting an RFID being carried by a user, or any other device capable of detecting the presence of one or more persons within a controlled space), and one or more doors each having one or more locks 212. Other types of in-room devices may include a minibar, an in-room safe, a telephone, a clock, a television, a radio, a computer, lights, fans, air conditioning units, heaters, *etc.*

In the depicted embodiment the thermostat 204 may include a controller 214 for implementing one or more energy management or security methods described herein. The controller 214 may also be adapted to facilitate communications between the thermostat 204 and the other in-room devices 208, 212 as well as out of room devices, such as a gateway 216 (which is but one example of an intermediate devices 16). In some embodiments a single gateway 216 may be in communication with a plurality of different rooms via their respective controllers 214. The messages exchanged between the controller 214 and these other devices may be utilized to facilitate a efficient and low-cost methods for managing the room 112. In other embodiments, a gateway 216 may comprise a controller for a plurality of rooms. Is some embodiments, control functionality may be split between multiple in-room and/or out-of-room devices.

In addition to receiving and sending messages as described above, the controller 214 may also be adapted to send messages, such as control messages, to in-room devices. As one example, the controller 214 may implement an automated DND feature whereby the controller 214 sends a message (either via a wired or wireless communication medium) to one or both of the doors/locks 212 instructing the doors/locks 212 to enter the DND mode when the room is occupied. It should be noted that this particular feature may be user configurable and, once configured, easily and automatically executed by the controller 214. As another example, the controller 214 may implement battery saving features by sending messages to various in-room devices, such as the motion detector 208, instructing the motion detector to enter a sleep mode until activity is detected at one of the doors/locks 212.

In accordance with at least some embodiments of the present invention, the controller 214 may also be adapted to send periodic status messages as well as messages reporting any in-room or room-related events (e.g., door messages, motion messages, occupied states, temperatures, runtime calculations, alarms, maintenance intervals, *etc.)* to the gateway 216. The gateway 216 is then configured to generate a message for transmission to the centralized management server 224 via the facility Local Area Network (LAN) 220. It should be appreciated by those skilled in the art even though the communication network between the gateway 216 and centralized management server 224 is depicted as a LAN 220, any other type of communication network or collection of communication networks may also be employed without departing from the scope of the present invention. For example, a WAN, cellular network, SMS network, CDMA network, TCP/IP network, or any other type of communication network may be used in addition to or in lieu of the LAN 220.

Although not depicted, the controller 214 may also be capable of performing traditional thermostat functions, such as controlling HVAC operations. Those skilled in the art will appreciate that the thermostat 204 may be connected to an HVAC system via a wired or wireless communication medium. The operation of the HVAC system may be managed by the controller 214 based on inputs received at the controller from the various in-room devices as well as based on instructions received from the centralized management server 224.

In accordance with at least some embodiments of the present invention, the thermostat 204 may be the only device provided with the controller 214 and, therefore, may be the device responsible for coordinating the communications within the room 112 and throughout the facility 100. In other embodiments, the controller 214 may be provided in the motion detector 208 or one of the doors/locks 212. In other embodiments, two or more devices within or associated with a room 112 may be provided with a controller 214. In such a configuration, the multiple controllers 214 may be configured to share the controlling responsibilities as well as facilitate communications. Multiple controllers 214 may also be useful in situations where it is desirable to avoid a single point of failure. Specifically, a first controller 214 in the room 112 may be the primary controller 214 responsible for performing all controlling activities and a second controller 214 in the room may be the room's backup controller that is only activated when the primary controller 214 has a failure or otherwise becomes unable to perform its controlling duties.

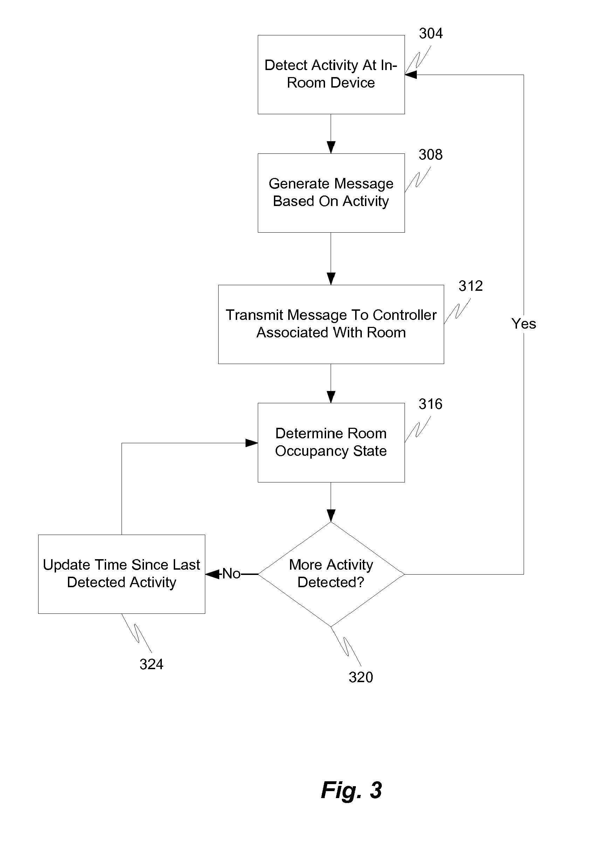

With reference now to Fig. 3, an exemplary energy management and/or security method will be described in accordance with at least some embodiments of the present invention. The method begins when activity is detected at an in-room device (step 304). The type of activity detected may depend upon the type of in-room device. For example, activity at a lock or door knob may comprise detecting the simple rotation of a lock or door knob whereas activity at a minibar may comprise detecting that the door has been opened.

The method continues with the generation of a message that reports the detected activity at the in-room device (step 308). In accordance with at least some embodiments of the present invention, the device at which the activity is detected is the device which generates the activity-reporting message. This message may be a simple pulse signal or may be a more complex message having one or more of a header, body, and trailer. The message is then transmitted to the controller 214 associated with that room (step 312). In some embodiments, the message is sent to an in-room controller 214, which may reside in the thermostat 204. In other embodiments, the message is sent to an out-of-room controller 214, which may reside in a gateway 216 or similar type of out-of-room device.

The activity message received at the controller 214 is subsequently analyzed to determine an occupancy state of the room (step 316). This allows the controller 214 to determine that occupants have been detected within a room 112 when that occupant uses any in-room device. Thus, by simply detecting that an occupant has pressed the buttons of the thermostat 204, opened or closed an in-room safe or minibar, turned on or off the lights, manually set the DND feature on the door/lock 212, the controller 214 can determine that the room 112 is occupied.

The method continues by determining whether more activity has been detected in the room (step 320). More specifically, the controller 214 may continue monitoring the various activities of the occupant and updating an activity log based on the same (step 324). Generally speaking, as long as the continued activity does not include opening a door 212, the controller 214 can continue to leave the room occupancy state as occupied. If, however, the controller 214 detects that the door has been opened, the controller 214 will need to re-evaluate the occupancy state of the room and the method will return to step 304. If no further activity is detected in the room 112 or at the door 212 after in-room activity has been detected, then the controller 214 can maintain the occupied status of the room until new activity is detected.

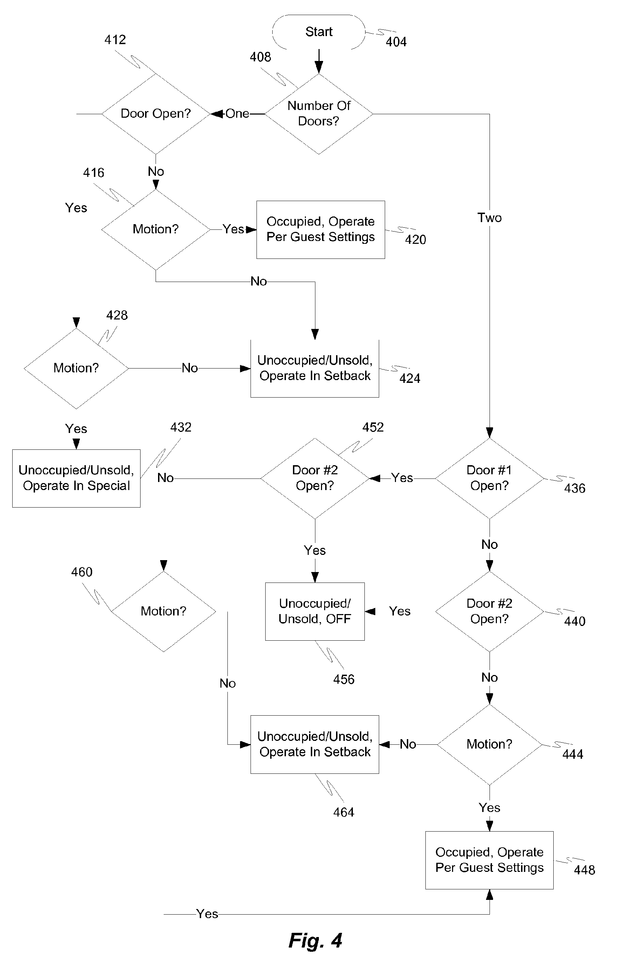

With reference now to Fig. 4, an exemplary method of determining a room's occupancy state will be described in accordance with at least some embodiments of the present invention. This particular method can be performed on rooms 112 having one or more doors, such as an interior door and an exterior door. The method begins by determining the number of doors in the room 112 (step 408). If the room 112 only contains one door, the method continues by determining whether that door is in a closed or open state (step 412) and whether any in-room motion is detected (e.g., by the motion detector 208) (steps 416 or 428).

If the door is in a closed state and in-room motion is detected, then it can be determined that the room is in an occupied state and the HVAC for that room can be operated according to occupant or guest settings (step 420).

In the event that the door is in an opened state and in-room motion is detected, then it can be determined that the room is either in an unoccupied or unsold state and the HVAC for that room is operated in a special manner (step 432). The special manner with which the HVAC is operated may vary depending upon the identity of the person that opened the door. If the door was opened by a guest or occupant, then the HVAC may be operated according to occupant or guest settings. If the door was opened by staff of the multi-room facility 100, then the HVAC may be operated according to setback settings. If there was no lock interface on the door 212 and it cannot be determined whether the activity was initiated by a guest or by a staff member, then the HVAC may be operated according to guest or occupant settings.

In the event that no motion is detected, it can be determined that the room is either in an unoccupied or unsold state and the HVAC for that room can be operated in setback, irrespective of whether the door is opened or closed (step 424).

Referring back to step 408, if the room 112 contains two types of doors (e.g., interior and exterior doors, but any number of exterior and interior doors), the method proceeds by determining the state of each door (steps 436, 452, and/or 440) as well as whether any in-room motion is detected (steps 444 or 460). The first analyzed door (*i.e.,* the door(s) analyzed in step 436) may correspond to an interior door whereas the second analyzed door (*i.e.,* the doors analyzed in steps 440 or 452) may correspond to exterior doors. In some embodiments, the term "interior door" is used to refer to any door leading from the room to an interior corridor of the building. Interior doors are usually characterized by the fact that they separate the room from an unsecured but HVAC controlled area. The term "exterior door" is used to refer to any door leading from the room to a building exterior. Exterior doors are usually characterized by the fact that they separate the room from an unsecured area that is not HVAC controlled. Thus, special energy management considerations are provided for the room depending upon whether an interior door or exterior door is detected as being open/closed.

In the event that both doors are closed and in-room motion is detected, then it can be determined that the room is in an occupied state and the HVAC can be operated according to occupant or guest preferences (step 448). The same may be true if an interior door is open but the exterior door is closed and in-room motion is detected.

If the exterior door is opened, then it can be determined that the room is in an unoccupied/unsold state and the HVAC may be turned off or operated in setback (step 456). This can be done regardless of the state of an interior door and without considering any motion input.

If in-room motion is not detected and an exterior door is closed, then it can be determined that the room is in an unoccupied/unsold state and the HVAC may be operated in setback (step 464). Again, this can be performed regardless of the state of the interior door.

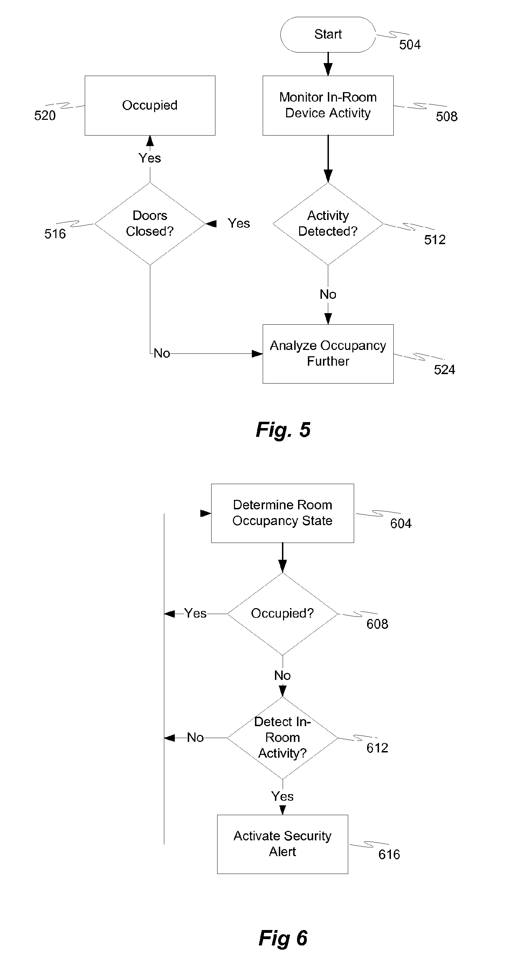

With reference now to Fig. 5, an exemplary alternative method of occupancy determination will be described in accordance with at least some embodiments of the present invention. The method begins at step 504 and continues by monitoring activity at one or more in-room devices (step 508). This monitoring may be performed proactively by the controller 214 in that the controller 214 may send queries to each of the in-room devices asking if they have had activity since the last query. This particular configuration requires the controller 214 to request status updates from the in-room devices. In an alternative configuration, the controller 214 may be reactive and each of the in-room devices may proactively report activity to the controller 214 when it occurs. This type of configuration allows the in-room devices to push status updates to the controller 214 without the controller 214 requesting such updates.

The method continues by determining whether any in-room activity has been detected at an in-room device (step 512). If this query is answered negatively, then occupancy will need to be analyzed further (e.g., by determining door state and/or whether any in-room motion is detected). Alternatively, if the query of step 512 is answered affirmatively, then the method continues by determining whether an exterior door is in a closed state (step 516). If the exterior door is closed, then it can be determined that the room is in an occupied state and the HVAC of the room can be operated accordingly (step 520). If the exterior door is open, then the method proceeds to step 524.

Referring now to Fig. 6, an exemplary intruder detection and reporting method will be described in accordance with at least some embodiments of the present invention. The method begins by the controller 214 determining an occupancy state of the room (step 604). If the room is determined to be occupied (step 608), then the method returns to step 604.

If, however, it is determined in step 608 that the room is in an unoccupied state, then the method continues with the controller 214 determining whether any in-room activity has been detected (step 612). If the controller 214 determines that the room is unoccupied and the controller 214 does not detect any in-room activity, then the method returns to step 604. If, however, in-room activity is detected while the room is in an unoccupied state, then a security alert is activated (step 616). As one example, if the inside handle of the door/lock 212 is turned, but the room is in an unoccupied state, then an alarm is issued to alert security that an under the door tool is being or may have been used to gain access to the room 112 surreptitiously. The alarm can be sounded in a number of different ways including via flashing the screen of the control panel 108, sending an email or SMS message to security personnel, sounding a buzzer, *etc.*

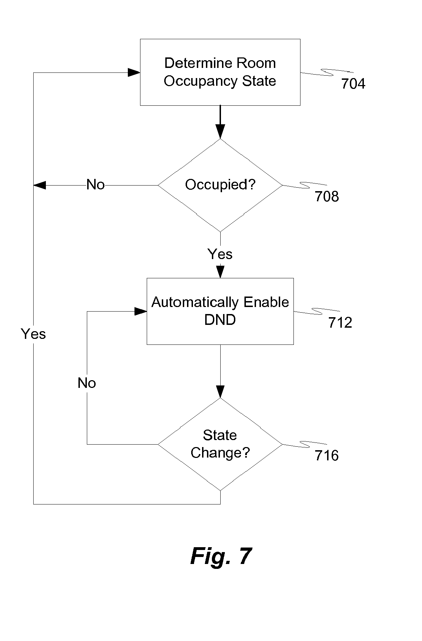

With reference now to Fig. 7, an exemplary method of activating DND will be described in accordance with at least some embodiments of the present invention. The method is initiated with the controller 214 determining an occupancy state of the room (step 704). If the room is determined to be unoccupied (step 708), then the method returns to step 704.

In the event that the controller 214 determines that the room is in an occupied state, the controller 214 can automatically enable the DND (step 712). In this step the controller 214 can send a signal or message to the door/lock 212 responsible for displaying the DND notice. The signal sent to the door/lock 212 may be in a specialized format instructing the door/lock 212 to automatically engage the DND feature. Alternatively, if a message is used, then the content of the message may include instructions for the door/lock 212 that, when received and executed by the door/lock 212, cause the DND feature to be automatically engaged. In either instance, the controller 214 is capable of initiating the activation of the DND feature without any user intervention. The only determination necessary to automatically engage the DND feature may be determining that the room is in an occupied state.

As can be appreciated by those skilled in the art, the auto DND feature may be configurable by a guest, occupant, or administrator. Thus, if a guest does not want to have the automatic DND feature available, then the guest may be allowed to disable the automatic DND feature. Also, if the automatic DND feature is disabled as a default, then a guest, occupant, or administrator may elect to have the automatic DND feature activated for a predetermined amount of time. The predetermined amount of time that the automatic DND feature is left on may include the duration of the guest's stay or some other measurable amount of time *(e.g.,* a day, a week, an hour, *etc.).* The configuration of the automatic DND feature may be controlled either at the controller 214 (e.g., via the thermostat interface), at the door/lock 212, or via a television or phone that can communicate the user preferences to the control panel 108 which can subsequently instruct the appropriate in-room device(s) to enable or disable the automatic DND feature according to the user preferences.

Once enabled, the automatic DND feature may continue to be enabled until the state of the room changes (step 716). This usually occurs when an exterior door opens, thereby changing the state of the room from occupied to unoccupied or at least temporarily changing the state of the room. Regardless, if the state of the room changes for whatever reason and duration, the method returns to step 704.

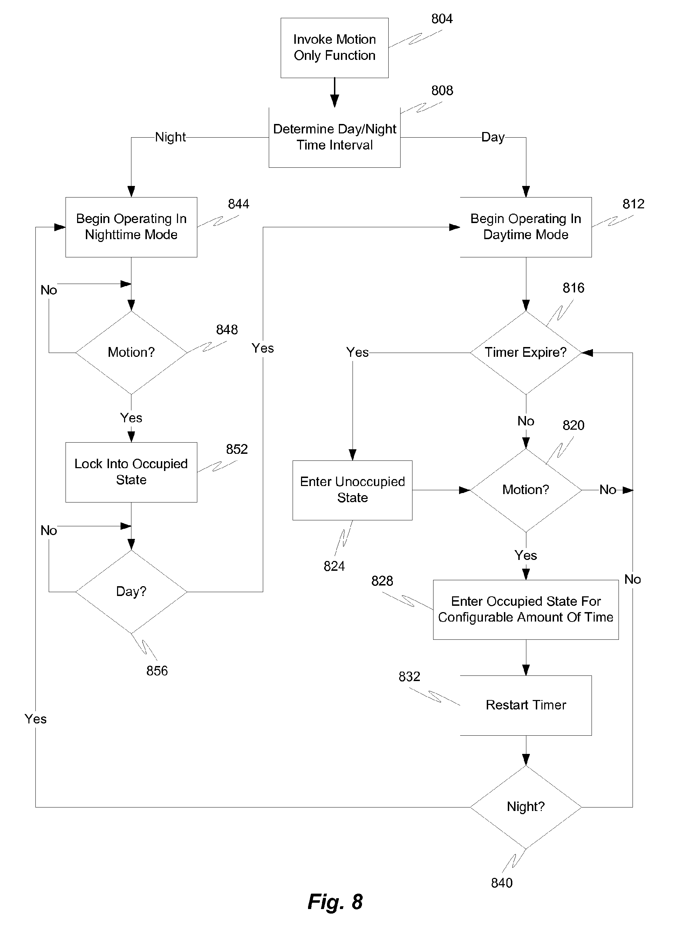

With reference to Fig. 8, one example of determining the occupancy state of a room based only on motion will be discussed in accordance with at least some embodiments of the present invention. This particular method allows the controller 214 to determine room state without analyzing the status of a door or any other device. Thus, the method begins when the motion only functionality is invoked (step 804). This step can be initiated by an administrator or some other user operating the control panel 108.

Once the motion only feature is invoked, the method continues by determining whether it is currently day or night (step 808). As one non-limiting example, it may be determined that the current time is day if the current time is between 7:00AM and 7:00PM local time. The night time may span from 7:00PM to 7:00AM. Of course, the intervals defining whether it is currently day or night may vary and may also be user configurable.

If it is currently day time, then the controller 214 begins operating in daytime mode (step 812). First the controller 214 will analyze a timer and compare the value of the timer against a user-configurable threshold (e.g., some amount of time that can typically range between 15 and 30 minutes) (step 816). When the controller 214 initially begins operating in the daytime mode, the value of the timer will likely be zero or some other relatively low value. If it is determined that the timer has expired (*i.e.,* due to the non-detection of motion after a predetermined amount of time during the day time), then the controller 214 automatically sets the state of the room to unoccupied (step 824).

After the timer analysis and/or setting of the room state to unoccupied, the controller 214 will determine if any in-room motion has been detected (step 820). This step can be performed in a variety of ways. As one example the controller 214 may query the motion detector 208. As another example, the motion detector 208 may be configured to automatically send a message to the controller 214 when motion is detected. In this configuration, the controller 214 will determine if any messages have been received from the motion detector 208 since the last motion analysis. If no motion-reporting messages have been received at the controller 214 since last check, then the method returns to step 816 without restarting the timer.

If in-room motion is detected, then the method continues with the controller 214 automatically setting the state of the room to occupied for a configurable amount of time (step 828). After the configurable amount of time has expired, the method continues with the controller 214 restarting the timer (step 832) and re-determining whether it is currently day or night (step 840). If it is still currently day time, then the method returns to step 816.

If, on the other hand, the controller 214 determines that it is night time (in either step 840 or 808), then the method with the controller 214 begins operating in nighttime mode (step 844). While in nighttime mode the controller 214 will continue to determine whether in-room motion has been detected (step 848). If in-room motion is not detected, then the controller 214 will continue to monitor the room for motion while keeping the room in an unoccupied state.

Once in-room motion is detected during the nighttime mode of operation, the controller 214 automatically locks the room into an occupied state for the remainder of the night (step 852). Thus, the method will continue with the controller 214 analyzing whether the current time has changed such that the controller 214 should begin operating in the daytime mode (step 856). No other devices will need to be analyzed. This will provide the controller 214 with the opportunity to turn off any other detection devices or detection functions until day time begins, thereby allowing the in-room devices to save batteries and extend their battery lifetime.

It should be appreciated, however, that it may be possible to override the nighttime mode of operation if the guest desires. For instance, a certain event or combination of events may cause the controller 214 to transition from the nighttime mode of operation to the daytime mode of operation. While this override feature is not necessary, it may be desirable in certain situations where a guest desires advanced temperature control capabilities during the night.

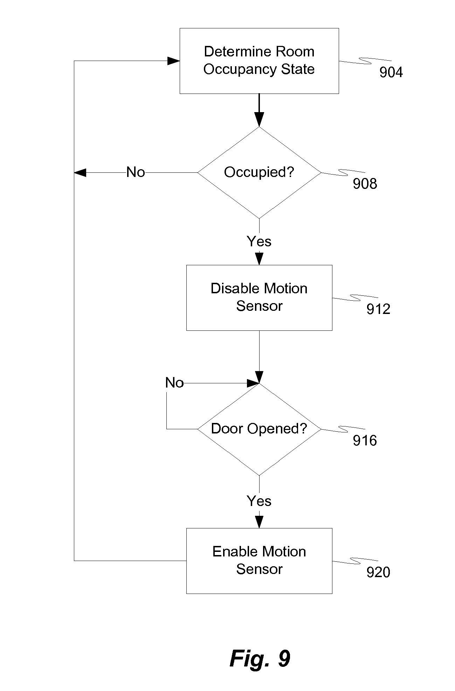

Fig. 9 further depicts a method of automatically turning off in-room sensors and device functions, particularly in an attempt to save batteries, in accordance with at least some embodiments of the present invention. The method is initiated with the controller 214 determining an occupancy state of the room (step 904). If the room is determined to be unoccupied (step 908), then the method returns to step 904.

If the room is determined to be occupied, the controller 214 is configured to disable one or more of the in-room motion detectors 208 (step 912). The controller 214 can accomplish this task by sending a message or signal to the in-room motion detectors 208 instructing them to power down or enter a sleep mode for a predetermined amount of time. During sleep mode, the motion detector 208 will disable all motion detection and communication functions (e.g., antennas and infrared devices) and will only run a clock as a background process. Only after a predetermined time has passed will the motion detector 208 wake up to send a message to the controller 214 requesting if it should continue operating in a sleep mode or return to an awake mode.

The controller 214 will cause the motion detector 208 to stay in this sleep mode until door activity is detected (step 916). Once door activity has been detected, the method proceeds with the controller 214 instructing the motion sensor 208 to become enabled again and begin scanning the room for motion (step 920). Thereafter, the method returns to step 904.

As can be appreciated by one skilled in the art, the controller 214 may not be capable of instantly waking up the motion detector 208. Rather, the controller 214 may have to wait until the motion detector 208 temporarily comes out of its sleep mode to exchange communications with the controller 214. At this point the controller 214 can instruct the motion detector 208 to switch back to an awake mode. This process may occur an appreciable amount of time after the door activity has been detected, however.

While the above-described flowcharts have been discussed in relation to a particular sequence of events, it should be appreciated that changes to this sequence can occur without materially effecting the operation of the invention. Additionally, the exact sequence of events need not occur as set forth in the exemplary embodiments. The exemplary techniques illustrated herein are not limited to the specifically illustrated embodiments but can also be utilized with the other exemplary embodiments and each described feature is individually and separately claimable.

The present invention, in various embodiments, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, includes providing devices and processes in the absence of items not depicted and/or described herein or in various embodiments hereof, including in the absence of such items as may have been used in previous devices or processes, e.g., for improving performance, achieving ease and\or reducing cost of implementation.

Additionally, the systems, methods and protocols of this invention can be implemented on a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a communications device, such as a phone, any comparable means, or the like. In general, any device capable of implementing a state machine that is in turn capable of implementing the methodology illustrated herein can be used to implement the various communication methods, protocols and techniques according to this invention.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Detailed Description, with each claim standing on its own as a separate preferred embodiment of the invention.

Moreover though the description of the invention has included description of one or more embodiments and certain variations and modifications, other variations and modifications are within the scope of the invention, e.g., as may be within the skill and knowledge of those in the art, after understanding the present disclosure. It is intended to obtain rights which include alternative embodiments to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

## Claims

1. A method of managing a multi-room facility, comprising at least one of the following steps:
(a) receiving, at a controller associated with a room, a message from an in-room device, the message reporting human-initiated activity at the in-room device; and
in response to receiving the message from the in-room device, setting a state of the room to occupied;
(b) determining that a state of a room is currently in an unoccupied state; detecting activity at an in-room device while the room is still in an unoccupied state; and
activating an intruder alert in response to the detecting step;
(c) determining that a room is currently in an occupied state; and
in response to determining that the room is currently in an occupied state, automatically enabling a Do Not Disturb function for the room;
(d) analyzing in-room motion activity for a room;
determining that in-room motion has occurred in the room; and
setting an occupancy state of the room to occupied in the absence of analyzing a state of a door in the room;
(e) determining that an occupancy state of a room is currently in an occupied state; and
based on determining that the occupancy state of the room is in an occupied state, instructing a motion detector in the room to enter a sleep mode.

2. The method of claim 1, wherein the message is transmitted from the in-room device automatically and in response to detecting the human-initiated activity.

3. The method of claims 1 or 2, further comprising:
prior to setting the state of the room to occupied, determining, by the controller, that a door of the room is closed.

4. The method of one of claims 1 to 3, further comprising:
transmitting, from the controller to the in-room device, a request for activity updates; and
determining, by the in-room device, that human-initiated activity has occurred at the in-room device since a previous request for activity update was received from the controller.

5. The method of one of claims 1 to 4, wherein the in-room device comprises one or more of a door, a lock, an electronic lock, a Do Not Disturb device, a light switch, a thermostat, a safe, a minibar, draperies, a television, a radio, and a clock.

6. The method of one of claims 1 to 5, wherein the in-room device comprises an internal handle of a door that separates the room from an unsecured area.

7. The method of one of claims 1 to 6, wherein the intruder alert comprises one or more of flashing a control panel screen, producing an image or set of images on a computer screen, sending an electronic message to security personnel, sounding a buzzer, and flashing a light.

8. The method of one of claims 1 to 7, the method further comprising:
generating, by a controller, a message, the message including instructions for enabling the Do Not Disturb function;
transmitting the message from the controller to at least one of a door and lock the message;
analyzing, by the at least one of a door and lock, the instructions of the message; and
activating, by the at least one of a door and lock, the Do Not Disturb function in accordance with the instructions of the message.

9. The method of one of claims 1 to 8, wherein the Do Not Disturb function remains enabled until an exterior door of the room is opened.

10. The method of one of claims 1 to 9, further comprising:
determining that a current time corresponds to a night time interval; and
locking the occupancy state of the room to occupied until the current time correspond to a day time interval.

11. The method of one of claims 1 to 10, further comprising:
determining that the current time has switched from the night time interval to the day time interval; and
unlocking the occupancy state of the room from occupied.

12. The method of one of claims 1 to 11, further comprising:
determining during the day time interval that in-room motion has been detected;
in response to determining that in-room motion has been detected during the day time interval, setting the occupancy state of the room to occupied.

13. The method of one of claims 1 to 12, wherein during the day time interval the occupancy state of the room is set to occupied for a predetermined amount of time.

14. The method of one of claims 1 to 13, wherein during sleep mode the motion detector is configured to disable one or more of its power-consuming devices for a predetermined amount of time and after expiration of the predetermined amount of time, enable its communication interface such that the motion detector can send a query message to a controller asking if the motion detector should remain in the sleep mode or enter an awake mode.

15. The method of one of claims 1 to 14, further comprising:
generating at a controller associated with the room a message containing instructions for entering the sleep mode; and
transmitting the message from the controller to the motion detector.

16. A multi-room facility, comprising:
a plurality of rooms each containing at least one door and one or more in-room devices, at least one of the in-room devices comprising a controller adapted to manage selected aspects of the room, wherein the controller is further adapted to execute at least one of the following sub-operations:
(a) determine that activity has occurred at a first in-room device and based on making such a determination set an occupancy state of the room to occupied;
(b) detect that activity has occurred at a second in-room device while the occupancy state of the room is unoccupied and activate an intruder alert;
(c) determine that the occupancy state of the room is occupied and automatically enable a Do Not Disturb function at the at least one door;
(d) determine the occupancy state of the room in the absence of analyzing a state of the at least one door; and
(e) determine that the occupancy state of the room is occupied and automatically disable an in-room motion sensor.
